# EUROPÄISCHE PATENTANMELDUNG

(11) **EP 4 512 285 A1**
(43) Veröffentlichungstag der Anmeldung: **26.02.2025**
(21) Anmeldenummer: 24193982.6
(22) Anmeldetag: 09.08.2024
(51) Int. Cl.: A47J 31/52, A47J 31/60

(54) **KAFFEEAUTOMAT MIT EINER ANZEIGE DIE EINEN VOR-/WARNBEREICH UMFASST SOWIE COMPUTERPROGRAMMPRODUKT**

(30) Priorität: 25.08.2023 DE 102023208150
(71) Anmelder: BSH Hausgeräte GmbH, 81739 München (DE)
(72) Erfinder: Kochan, Alex, 83358 Seebruck (DE); Losbichler, Matthias, 84574 Taufkirchen (DE); Buchner, Albert, 83349 Palling (DE); Mirbeth, Sebastian, 83374 Traunwalchen (DE)

(57) **Zusammenfassung**

Die Erfindung betriff einen Kaffeeautomaten (1) mit einer Steuerung (2) und einer Anzeige (3), wobei der Kaffeeautomat so eingerichtet und programmiert ist, dass die Anzeige (3) eine Hauptanzeigefläche (4) und einen Vor-/Warnbereich (5) umfasst. Die Erfindung betriff betrifft auch ein Computerprogrammprodukt umfassend dementsprechende Befehle.

## Beschreibung

Die vorliegende Erfindung betrifft einen Kaffeeautomaten mit einer Steuerung und einer Anzeige, die einen Vor-/Warnbereich umfasst, sowie ein entsprechendes Computerprogrammprodukt.

Es ist bekannt, dass bei Kaffeeautomaten eine verbleibende Tassenzahl bis zu einer erforderlichen Servicetätigkeit zur Reinigung und/oder Entkalkung angezeigt wird, z. B. aus der EP 1 903 519 A1. Jedoch rückt besonders bei Kaffeeautomaten mit einer Reinigungsvorrichtung wie sie z. B. als automatische Entkalkungsvorrichtung aus der DE 10 2011 081 010 A1 bekannt ist, die eigentliche "Tätigkeit" dabei eher in den Hintergrund. Denn der Automat führt die Entkalkung im Wesentlichen selbstständig durch. Dennoch ist während einer solchen Entkalkung kein Bezug von Kaffeegetränken möglich.

Zudem muss unter Umständen eine erforderliche Servicetätigkeit, z. B. eine Entkalkung, nötigenfalls zwingend durchgeführt werden, da ansonsten aus Sicherheitsgründen ein weiterer Getränkebezug maschinenseitig unterbunden wird. Die Getränkezubereitung wird in solchen Fällen erst nach einer Entkalkung wieder freigegeben, wie z. B. aus der EP 3 616 576 A1 bekannt.

Gerade bei Kaffeeautomaten mit einer automatischen Entkalkungsvorrichtung ist Bedienpersonen in der Regel nicht bewusst, wann genau die Servicetätigkeit erforderlich ist, oder stattfindet. Jedoch können eben während solcher Servicetätigkeiten, z. B. währen einer Entkalkung, kein Getränke bezogen werden. Nachteilig wäre es daher, wenn die Servicetätigkeit, z. B. die Entkalkung, automatisch zur Unzeit erforderlich ist oder stattfindet, z. B., wenn die Bedienperson ein Kaffeegetränk beziehen möchte oder gar Besuch hat und viele Kaffeegetränke bezogen werden sollen.

Eine Aufgabe der vorliegenden Erfindung ist es daher, die genannten Nachteile zu verbessern, insbesondere einen Kaffeeautomaten, z. B. mit einer Reinigungsvorrichtung, weiter zu verbessern und ganz besonders den Bedienkomfort auf nachhaltige Weise zu erhöhen.

Diese Aufgabe wird durch einen Kaffeeautomaten mit den Merkmalen des Anspruchs 1 gelöst sowie auch durch ein Computerprogrammprodukt mit den Merkmalen des Anspruchs 10. Vorteilhafte Weiterbildungen der Erfindung sind Gegenstand der abhängigen Ansprüche.

Demgemäß weist der Kaffeeautomat eine Steuerung und eine Anzeige auf, und insbesondere auch eine automatische Reinigungsvorrichtung. Der Kaffeeautomat ist dabei so eingerichtet und programmiert, dass die Anzeige eine Hauptanzeigefläche und einen Vor-/Warnbereich umfasst. Erfindungsgemäß ist der Vor-/Warnbereich kleiner als 25 % der Hauptanzeigefläche und wird eine mehrstufige Vor-/Warnmeldung im Vor-/Warnbereich, abhängig von einer verbleibenden Tassenzahl bis zu einer erforderlichen Reinigungstätigkeit so angezeigt, dass diese die Hauptanzeigefläche zumindest teilweise überdeckt. Insbesondere kann der Vor-/Warnbereich kleiner als 10 % der Hauptanzeigefläche sein, ganz besonders kleiner 5 %. Dabei kann im Vor-/Warnbereich bei einer ausreichenden verbleibenden Tassenzahl, z. B. bei mehr als 10 Tassen, noch keine Vor-/Warnmeldung angezeigt sein, oder z. B. der gesamte Vor-/Warnbereich transparent gestaltet sein. Der Vor-/Warnbereich muss in dieser Stufe als Solcher nicht erkennbar sein und die Hauptanzeigefläche kann eine gesamte aktive Fläche der Anzeige abdecken. Beim Erreichen z. B. eines vordefinierten Grenzwerts bzw. mehrerer vordefinierter Grenzwerte der verbleibenden Tassenzahl bis zu einer erforderlichen Reinigungstätigkeit wird je eine von mehreren, der verbleibenden Tassenzahl zugeordneten Stufe der mehrstufigen Vor-/Warnmeldung im Vor-/Warnbereich, so angezeigt, dass diese die Hauptanzeigefläche zumindest teilweise überdeckt. Dadurch kann erreicht werden, dass die Vor-/Warnmeldung und insbesondere der Veränderung von Stufe zu Stufe viel einfacher und zuverlässiger wahrgenommen wird, jedoch sie auch nicht allzu störend oder unnötigerweise aufdringlich wahrgenommen wird. Denn eine Anzeige auf der Hauptanzeigefläche kann weiterhin fast unbeeinträchtigt erfolgen.

Durch das Vorgenannte wird auch ermöglicht, eine Bedienperson unaufdringlich und doch zuverlässig darauf hinzuweisen, dass eine Reinigungstätigkeit demnächst ansteht und daher demnächst ein Bezug von Kaffeegetränken vorübergehend nicht möglich sein wird. Beispielsweise kann eine Bedienperson schon morgens beim ersten Kaffee anhand der unaufdringlichen und doch zuverlässigen Vorwarnmeldung erkennen, dass die verbleibende Tassenzahl für die am Nachmittag geplante Kaffeerunde mit Besuch und größerer benötigter Kaffeegetränkeanzahl nicht ausreicht. Daher kann die Bedienperson die fällige Reinigungstätigkeit sehr einfach schon vor dem Eintreffen des Besuchs durchführen lassen, indem sie z. B. über ein Menü die automatische Reinigungsvorrichtung die Reinigung schon am Vormittag oder z. B. nach der Mittagspause durchführen lässt, oder diese manuell vornimmt. Dadurch kann nicht nur der Bedienkomfort des Kaffeeautomaten verbessert werden, sondern dies auch auf sehr nachhaltige Weise geschehen. Denn es ist somit nicht nötig, einen Kaffeeautomaten mit automatischer Reinigungsvorrichtung vorsorglich in jeder Nacht eine Reinigung ausführen zu lassen, nur um sicherzustellen, dass eine Reinigung nicht Tagsüber nötig wird. Dadurch kann auch ein Verbrauch von Reinigungsmitteln nachhaltig auf das Nötigste reduziert werden.

Unter einer Hauptanzeigefläche der Anzeige soll hier insbesondere eine aktive Anzeigefläche einer Anzeige verstanden werden, z. B. eine von einem Rahmenbereich umgebene Displayfläche eines Touchdisplays, wogegen auf dem Rahmenbereich z. B. nur eine passive Anzeige durch aufgedruckte Symbole oder dergleichen stattfindet.

Unter einer erforderlichen Reinigungstätigkeit soll hier insbesondere die Durchführung eines Reinigungsprogramms und/oder eines Entkalkungsprogramms verstanden werden. Dies kann manuell gestartet werden und eine manuelle Zugabe eines Reinigungs- und/oder Entkalkungsmittels erfordern. Die Reinigungstätigkeit respektive das Reinigungsprogramms kann insbesondere auch automatisch durch eine automatische Reinigungsvorrichtung des Kaffeeautomaten durchgeführt werden.

Bei einer vorteilhaften Weiterbildung der erfindungsgemäßen Lösung umfasst in einer ersten Vorwarnstufe die Vorwarnmeldung im Vor-/Warnbereich eine verbleibende Tassenzahl bis zu der erforderlichen Reinigungstätigkeit, wobei insbesondere die verbleibende Tassenzahl einem Bereich von 10 bis 0 entstammt. Dadurch kann erreicht werden, dass die Vor-/Warnmeldung einfach und zuverlässig wahrgenommen und richtig interpretiert wird, ohne allzu störend oder unnötigerweise aufdringlich zu erscheinen. Denn die Anzeige auf der Hauptanzeigefläche kann weiterhin fast unbeeinträchtigt erfolgen. Jedoch ist für eine Bedienperson sofort ersichtlich, welche Reichweite noch bis zur nötigen Reinigungstätigkeit verbleibt, ohne eine Kenntnis über Füllmengen etc. haben zu müssen oder etwas umzurechnen. Im bevorzugten Bereich kann auch ein Verbrauch von Reinigungsmitteln nachhaltig auf das Nötigste reduziert werden, da nicht übermäßig früh eine vorsorgliche Reinigungstätigkeit ausgelöst wird und dennoch rechtzeitig.

Bei einer weiteren vorteilhaften Weiterbildung der erfindungsgemäßen Lösung wird in einer zweiten Vorwarnstufe vor einem Getränkebezug ein Vorwarntext in der Hauptanzeigefläche zur Anzeige gebracht, bis eine Eingabe einer Bedienperson erfolgt. Dadurch kann erreicht werden, dass die Vor-/Warnmeldung noch zuverlässiger wahrgenommen wird und gleichzeitig durch die etwas aufdringlichere Vorwarnung eine erhöhte Dringlichkeit angenommen wird, ohne allzu störend zu erscheinen.

Bei einer weiteren vorteilhaften Weiterbildung der erfindungsgemäßen Lösung signalisiert in einer ersten Warnstufe eine Warnmeldung im Vor-/Warnbereich eine höhere Dringlichkeit, als die erste Vorwarnmeldung, insbesondere durch ein zur Anzeige bringen in einer vergleichsweise stärkeren und/oder dunkleren Signalfarbe. Dadurch kann die weiter erhöhte Dringlichkeit gezielt signalisiert und wahrgenommen werden, gerade noch ohne endgültig als aufdringlich zu erscheinen.

Bei einer weiteren vorteilhaften Weiterbildung der erfindungsgemäßen Lösung wird in einer zweiten Warnstufe vor einem Getränkebezug ein Warntext in der Hauptanzeigefläche zur Anzeige gebracht, bis eine Bedienperson eine Kenntnisnahme des Warntextes durch eine Eingabe bestätigt. Dadurch kann die höchste Dringlichkeit gezielt signalisiert und wahrgenommen werden, und durch die zwingend nötige Bestätigung der Kenntnisnahme vermittelt werden, dass ein weiterer Aufschub auch Konsequenzen nach Sich ziehen kann.

Bei einer weiteren vorteilhaften Weiterbildung der erfindungsgemäßen Lösung wird der Warntext so angezeigt, dass die Hauptanzeigefläche dadurch zu mindestens 30 % überdeckt ist, insbesondere zu mindestens 50 % überdeckt ist. Dadurch kann die Signalwirkung verstärkt und der höchsten Dringlichkeit gezielt entsprechend mehr Raum gegeben werden und so die Wahrnehmung der Dringlichkeit gezielt verstärkt werden.

Bei einer weiteren vorteilhaften Weiterbildung der erfindungsgemäßen Lösung wird während der Warnstufe keine verbleibende Tassenzahl angezeigt, oder zur Anzeige gebracht, dass keine Tassenanzahl mehr verbleibt. Dadurch kann gezielt signalisiert und wahrgenommen werden, dass nicht nur ein weiterer Aufschub auch Konsequenzen nach Sich ziehen kann, sondern schon ein Betrieb in einem Überziehungsbereich stattfindet und weiterer Aufschub die Konsequenzen nach sich ziehen wird.

Bei einer weiteren vorteilhaften Weiterbildung der erfindungsgemäßen Lösung ist ab dem Beginn der ersten Warnstufe bis zum Ende der zweiten Warnstufe ein Bezug von mindestens 10 Getränken möglich. Dadurch kann ein Puffer erreicht werden, der verhindern kann, dass eine geringe Überziehung der mit der Vorwarnung angezeigten Reichweite sofort zu einem Sperren des Getränkebezugs bis nach der Durchführung der Reinigungstätigkeit führt. Weiter vorteilhaft kann es sein, dass ab dem Beginn der ersten Warnstufe bis zum Ende der zweiten Warnstufe ein Bezug von maximal 25 Getränken möglich ist. Dies kann die Wahrnehmung der Dringlichkeit fördern und hat einen positiven Effekt auf eine Reaktionsgeschwindigkeit beim nächsten Auftreten der Vorwarnung.

Bei einer weiteren vorteilhaften Weiterbildung der erfindungsgemäßen Lösung kann nach der zweiten Warnstufe ein weiterer Getränkebezug durch den Kaffeeautomaten unterbunden werden. Dadurch kann einerseits eine Betriebssicherheit des Kaffeeautomaten gewährleistet bleiben, weil z. B. eine zu starke Verkalkung eine Verstopfung und/oder Überhitzung von Bauteilen des Kaffeeautomaten hervorrufen kann, was unter Umständen nicht reversibel ist. Andererseits kann dadurch die Wahrnehmung der Dringlichkeit weiter gefördert werden und dadurch der positive Effekt auf eine Reaktionsgeschwindigkeit beim nächsten Auftreten der Vorwarnung weiter erhöht werden.

Die eingangs genannten Aufgabe wird auch durch ein Computerprogrammprodukt gelöst, das erfindungsgemäß Befehle umfasst, die bei der Ausführung des Programms durch eine Steuerung eines Kaffeeautomaten, der diese Steuerung und eine Anzeige umfasst, bewirken, dass die Steuerung entsprechend der vorhergehenden Beschreibung programmiert ist.

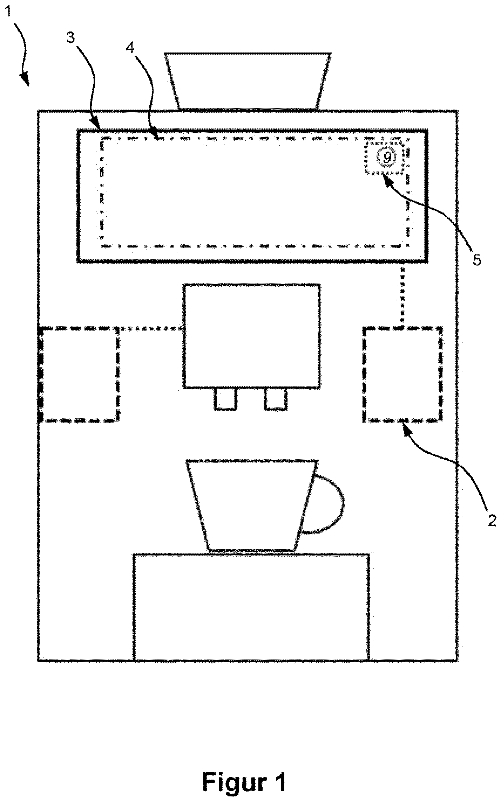

Weitere Vorteile und vorteilhafte Ausgestaltungen ergeben sich aus der im Folgenden in Verbindung mit der einzigen Figur 1 beschriebenen Ausführungsform. Es zeigt:
- Figur 1: ein schematisch dargestelltes Beispiel eines erfindungsgemäßen Kaffeeautomaten in der Vorderansicht.

In Figur 1 ist ein Kaffeeautomat 1 dargestellt, der eine Steuerung 2, eine Anzeige 3 und eine automatische Reinigungsvorrichtung (links neben dem Kaffeeauslauf) aufweist. Der Kaffeeautomat 1 ist so eingerichtet und programmiert, dass die Anzeige 3 eine Hauptanzeigefläche 4 und einen Vor-/Warnbereich 5 umfasst. Der Vor-/Warnbereich 5 ist kleiner ist als 25 % der Hauptanzeigefläche 4. Im dargestellten Beispiel wird in einer ersten Stufe einer mehrstufigen Vor-/Warnmeldung im Vor-/Warnbereich 5, abhängig von der Tassenzahl von im vorliegenden Beispiel aktuell noch neun (9) verbleibenden Tassen bis zu einer erforderlichen Reinigungstätigkeit, eine Vorwarnmeldung so angezeigt, dass diese die Hauptanzeigefläche 4 zumindest teilweise überdeckt. Dadurch kann die Vorwarnmeldung viel einfacher und zuverlässiger wahrgenommen werden, ohne allzu störend oder unnötigerweise aufdringlich zu erscheinen. Denn eine Anzeige auf der Hauptanzeigefläche kann weiterhin fast unbeeinträchtigt erfolgen.

In der in Figur 1 dargestellten ersten Vorwarnstufe umfasst die Vorwarnmeldung im Vor-/Warnbereich 5 eine verbleibende Tassenzahl bis zu der erforderlichen Reinigungstätigkeit, wobei die verbleibende Tassenzahl hier mit neuen Tassen einem Bereich von 10 bis 0 entstammt. In einer nicht dargestellten zweiten Vorwarnstufe wird vor einem Getränkebezug ein Vorwarntext in der Hauptanzeigefläche 4 zur Anzeige gebracht, bis eine Eingabe einer Bedienperson erfolgt.

In einer nicht dargestellten ersten Warnstufe signalisiert eine Warnmeldung im Vor-/Warnbereich 5 eine höhere Dringlichkeit, als die erste Vorwarnmeldung, hier durch ein zur Anzeige bringen in einer vergleichsweise stärkeren und dunkleren Signalfarbe, hier in dunkelrot anstatt in hellorange. In einer nicht dargestellten zweiten Warnstufe wird vor einem Getränkebezug ein Warntext in der Hauptanzeigefläche 4 zur Anzeige gebracht, bis eine Bedienperson eine Kenntnisnahme des Warntextes durch eine Eingabe bestätigt. Dadurch kann die Vor-/Warnmeldung noch zuverlässiger wahrgenommen werden und gleichzeitig durch die etwas aufdringlicheren Vorwarnungen eine erhöhte Dringlichkeit signalisiert werden, ohne allzu störend zu erscheinen.

Dabei wird in einer nicht dargestellten Ausgestaltung der Warntext so angezeigt, dass die Hauptanzeigefläche 4 dadurch zu mindestens 50 % überdeckt ist. Jedoch wird in dieser Ausgestaltung während der Warnstufe keine verbleibende Tassenzahl mehr angezeigt, da ja faktisch gesehen auch keine Tassenanzahl mehr verbleibt und der Weiterbetrieb des Kaffeeautomaten 1 schon in einem Überziehungsbereich stattfindet.

Im vorliegenden Beispiel ist (in der Figur nicht dargestellt) ab dem Beginn der ersten Warnstufe bis zum Ende der zweiten Warnstufe ein Bezug von mindestens 20 Getränken möglich. Nach der zweiten Warnstufe wird jedoch ein weiterer Getränkebezug durch den Kaffeeautomaten 1 unterbunden. Um zu vermeiden, dass eine Bedienperson, z. B. bei einer erhöhten Nachfrage an Kaffeegetränken bei Besuch zu einer Kaffeerunde, keine Kaffeegetränke beziehen kann, weil gerade eine Reinigungstätigkeit bzw. ein Reinigungsprogramm erforderlich ist oder abläuft, ist in den Kaffeeautomaten 1 ein Computerprogrammprodukt geladen, umfassend Befehle, die bei der Ausführung des Programms durch die Steuerung 2 des Kaffeeautomaten 1, der auch die Anzeige 3 umfasst, bewirken, dass die Steuerung 2 entsprechend programmiert ist. Da das Computerprogrammprodukt auch noch nach dem Kauf eines Kaffeeautomaten 1 über eine Datenschnittstelle und eine App z. B. über das Internet bezogen und in die Steuerung 2 geladen werden kann, ist es im Prinzip möglich, jeden geeigneten bestehenden Automaten in die Lage zu versetzten, die genannten Vorteile nutzten zu können. Daher muss hierfür an Sich nicht extra ein neuer Automat hergestellt werden, was sich besonders vorteilhaft auf die Nachhaltigkeit auswirkt. Insbesondere wird daher ermöglicht, den Bedienkomfort auf besonders nachhaltige Weise zu verbessern.

Die im Ausführungsbeispiel dargestellten Bestandteile wie z. B. die Steuerung 2 und die Anzeige 3 sowie deren Größenverhältnisse zueinander sind grundsätzlich nicht als maßstabsgerecht anzusehen. Vielmehr können einzelne Elemente wie beispielsweise die Anzeige 3 und die Hauptanzeigefläche 4 zur besseren Darstellbarkeit und/oder zum besseren Verständnis übertrieben dick oder groß dimensioniert dargestellt sein. Die Erläuterung des erfindungsgemäßen Kaffeeautomaten 1 und der Anzeige 3 anhand der beschriebenen Ausführungsbeispiele ist nicht als Beschränkung der Erfindung auf diese zu betrachten. Vielmehr umfasst die Erfindung jedes neue Merkmal sowie jede Kombination von Merkmalen, auch wenn dieses Merkmal oder diese Kombination selbst nicht explizit in den Patentansprüchen oder den Ausführungsbeispielen angegeben ist.

### BEZUGSZEICHENLISTE

- 1: Kaffeeautomat
- 2: Steuerung
- 3: Anzeige
- 4: Hauptanzeigefläche
- 5: Vor-/Warnbereich

## Patentansprüche

1. Kaffeeautomat (1) mit einer Steuerung (2) und einer Anzeige (3), und insbesondere mit einer automatischen Reinigungsvorrichtung, wobei der Kaffeeautomat so eingerichtet und programmiert ist, dass die Anzeige (3) eine Hauptanzeigefläche (4) und einen Vor-/Warnbereich (5) umfasst, **dadurch gekennzeichnet, dass** der Vor-/Warnbereich (5) kleiner ist als 25 % der Hauptanzeigefläche (4) und eine mehrstufige Vor-/Warnmeldung im Vor-/Warnbereich (5), abhängig von einer verbleibenden Tassenzahl bis zu einer erforderlichen Reinigungstätigkeit, so angezeigt wird, dass diese die Hauptanzeigefläche (4) zumindest teilweise überdeckt.

2. Kaffeeautomat (1) nach Anspruch 1, **dadurch gekennzeichnet, dass** in einer ersten Vorwarnstufe die Vorwarnmeldung im Vor-/Warnbereich (5) eine verbleibende Tassenzahl bis zu der erforderlichen Reinigungstätigkeit umfasst, wobei insbesondere die verbleibende Tassenzahl einem Bereich von 10 bis 0 entstammt.

3. Kaffeeautomat (1) nach Anspruch 2, **dadurch gekennzeichnet, dass** in einer zweiten Vorwarnstufe vor einem Getränkebezug ein Vorwarntext in der Hauptanzeigefläche (4) zur Anzeige gebracht wird, bis eine Eingabe einer Bedienperson erfolgt.

4. Kaffeeautomat (1) nach einem der Ansprüche 2 bis 3, **dadurch gekennzeichnet, dass** in einer ersten Warnstufe eine Warnmeldung im Vor-/Warnbereich (5) eine höhere Dringlichkeit signalisiert, als die erste Vorwarnmeldung, insbesondere durch ein zur Anzeige bringen in einer vergleichsweise stärkeren und/oder dunkleren Signalfarbe.

5. Kaffeeautomat (1) nach einem der Ansprüche 1 bis 4, **dadurch gekennzeichnet, dass** in einer zweiten Warnstufe vor einem Getränkebezug ein Warntext in der Hauptanzeigefläche (4) zur Anzeige gebracht wird, bis eine Bedienperson eine Kenntnisnahme des Warntextes durch eine Eingabe bestätigt.

6. Kaffeeautomat (1) nach Anspruch 5, **dadurch gekennzeichnet, dass** der Warntext so zur Anzeige gebracht wird, dass die Hauptanzeigefläche (4) dadurch zu mindestens 30 % überdeckt ist, insbesondere zu mindestens 50 % überdeckt ist.

7. Kaffeeautomat (1) nach einem der Ansprüche 4 bis 6, **dadurch gekennzeichnet, dass** während der Warnstufe keine verbleibende Tassenzahl angezeigt wird, oder zur Anzeige gebracht wird, dass keine Tassenanzahl mehr verbleibt.

8. Kaffeeautomat (1) nach Anspruch 6, **dadurch gekennzeichnet, dass** ab dem Beginn der ersten Warnstufe bis zum Ende der zweiten Warnstufe ein Bezug von mindestens 10 Getränken, und insbesondere maximal 25 Getränken, möglich ist.

9. Kaffeeautomat (1) nach einem der Ansprüche 6 bis 8, **dadurch gekennzeichnet, dass**, nach der zweiten Warnstufe ein weiterer Getränkebezug durch den Kaffeeautomaten (1) unterbunden werden kann.

10. Computerprogrammprodukt, umfassend Befehle, die bei der Ausführung des Programms durch eine Steuerung (2) eines Kaffeeautomaten (1) mit der Steuerung (2) und einer Anzeige (3) bewirken, dass die Steuerung (2) gemäß einem der Ansprüche 1 bis 9 programmiert ist.
